# EUROPEAN PATENT APPLICATION

(11) **EP 4 293 748 A2**
(43) Date of publication of application: **20.12.2023**
(21) Application number: 23173155.5
(22) Date of filing: 12.05.2023
(51) Int. Cl.: H01M 4/139, H01M 4/1395, H01M 4/36, H01M 4/38, H01M 4/48, H01M 4/587, H01M 4/62

(54) **ANODE ACTIVE MATERIAL FOR SECONDARY BATTERY AND LITHIUM SECONDARY BATTERY INCLUDING THE SAME**

(30) Priority: 18.05.2022 KR 20220060811
(71) Applicant: SK On Co., Ltd., Seoul 03161 (KR)
(72) Inventor: YOO, Seok Keun, 34124 Daejeon (KR); PARK, Gwi Ok, 34124 Daejeon (KR); CHUNG, Ju Ho, 34124 Daejeon (KR)
(74) Representative: Prüfer & Partner mbB Patentanwälte · Rechtsanwälte

(57) **Abstract**

An anode active material and a secondary battery including the anode active material are disclosed. An anode active material for a secondary battery includes a plurality of composite active material particles, each composite active material particle containing a first active material that includes silicon and a second active material that includes carbon, and a carbon coating covering at least a portion of a surface of at least one of the plurality of composite active material particles. The anode active material has a volume-based particle size distribution represented as a ratio D₁₀/D₅₀ ranging from 0.40 to 0.75 and a ratio Dₘᵢₙ/D₅₀ ranging from 0.3 to 1, wherein D₁₀ indicates a particle diameter corresponding to a volume fraction of 10%, D₅₀ indicates a particle diameter corresponding to a volume fraction of 50%, and Dₘᵢₙ indicates a minimum particle diameter.

## Description

### TECHNICAL FIELD

The disclosure of this patent document relates to an anode active material and a lithium secondary battery including the same.

### BACKGROUND

The rapid growth of electric vehicles and portable devices, such as camcorders, mobile phones, and laptop computers, has brought increasing demands for secondary batteries, which can be charged and discharged repeatedly. Examples of the secondary batteries include a lithium secondary battery, a nickel-cadmium battery, a nickelhydrogen battery, etc. The lithium secondary battery is now widely used due to high operational voltage and energy density per unit weight, a high charging rate, a compact dimension, etc.

### SUMMARY

In an aspect of the disclosed technology, there is provided an anode active material for a secondary battery having improved electrical property and stability.

In an aspect of the disclosed technology, there is provided a lithium secondary battery having improved electrical property and stability.

An anode active material for a secondary battery includes a plurality of composite active material particles, each composite active material particle containing a first active material that includes silicon and a second active material that includes carbon; and a carbon coating covering at least a portion of a surface of at least one of the plurality of composite active material particles, wherein the anode active material has a volume-based particle size distribution represented as a ratio D₁₀/D₅₀ ranging from 0.40 to 0.75 and a ratio Dₘᵢₙ/D₅₀ ranging from 0.3 to 1, wherein D₁₀ indicates a particle diameter corresponding to a volume fraction of 10%, D₅₀ indicates a particle diameter corresponding to a volume fraction of 50%, and Dₘᵢₙ indicates a minimum particle diameter.

In some implementations, an anode active material for a secondary battery includes a plurality of a composite active material particle containing a silicon-based active material and a carbon-based active material, and a carbon coating covering at least a portion of a surface of the composite active material particle. In a volume-based particle size distribution, a ratio represented as D₁₀/D₅₀ of a particle diameter D₁₀ at a volume fraction of 10% to a particle diameter D₅₀ at a volume fraction of 50% is in a range from 0.40 to 0.75, and a ratio represented as Dₘᵢₙ/D₅₀ of a minimum particle diameter Dₘᵢₙ to D₅₀ is 0.3 or more.

In some embodiments, the ratio Dₘᵢₙ/D₅₀ of the anode active material may be in a range from 0.3 to 0.6.

In some embodiments, the minimum particle diameter Dₘᵢₙ of the anode active material may be 2 µm or more.

In some embodiments, the minimum particle diameter Dₘᵢₙ of the anode active material may be in a range from 3 µm to 7 µm.

In some embodiments, the D₅₀ of the anode active material may be in a range from 5 µm to 20 µm.

In some embodiments, a specific surface area of the anode active material may be in a range from 2m²/g to 8m²/g.

In some embodiments, at least one of the plurality of composite active material particles may have a structure in which at least a portion of the silicon-based active material is embedded in the carbon-based active material.

In some embodiments, at least a portion of the silicon-based active material may be exposed to the surface of the at least one of the plurality of composite active material particles.

In some embodiments, a molar ratio of silicon atoms to carbon atoms in the composite active material particle may be 0.7 or less.

In some embodiments, the composite active material particle may include a plurality of pores at an inside or on the surface thereof.

In some embodiments, an average diameter of the pores may be in a range from 1 nm to 500 nm.

In some embodiments, a porosity of the composite active material particle may be in a range from 0.1 vol% to 40 vol% based on a total volume of the composite active material particle.

In some embodiments, a content of the carbon coating may be in a range from 0.1 wt% to 15 wt% based on a total weight of the anode active material.

In some embodiments, a crystallinity of the carbon coating may be smaller than that of the carbon-based active material.

A lithium secondary battery includes an anode comprising the anode active material for a secondary battery according to the above-described embodiments, and a cathode facing the anode.

In some example embodiments, an anode active material may include a composite active material particle including a silicon-based active material and a carbon-based active material, and a carbon coating covering at least a portion of a surface of the composite active material particle. The anode active material may provide high energy density and charge/discharge capacity from the silicon-based active material, and an electrochemical stability of the anode active material may be improved by the carbon-based active material. Additionally, the carbon coating may block a contact with an electrolyte to prevent a volume expansion of the composite active material particles, thereby improving structural stability of the anode active material.

The anode active material may have a ratio of a minimum particle diameter to a predetermined volumetric average particle diameter, and a ratio of a particle diameter at a 10% volume fraction to the predetermined volumetric average particle diameter. Accordingly, contents of micro-particles having a relatively small size and macro-particles having a relatively large size may be controlled. Thus, power and life-span properties of the lithium secondary battery may be improved.

The anode active material may have a predetermined minimum particle size, so that side reactions with an electrolyte and consumption of the electrolyte may be suppresses, and capacity retention and high-temperature storage property of the secondary battery may be improved. The anode active material may have a specific surface area within a predetermined range, so that a passage for electron/ion transfer may be sufficiently provided in an anode. Thus, stability of the anode may be improved, and high capacity and high rate properties may also be obtained.

The composite active material particles may have a porous structure. Accordingly, lithium ion intercalation/discharge performance may be improved, and rapid charging properties and charging/discharging properties may be improved.

### BRIEF DESCRIPTION OF THE DRAWINGS

FIG. 1 is a schematic top plan view illustrating a secondary battery in accordance with example embodiments.
FIG. 2 is a schematic cross-sectional view illustrating an electrode assembly in accordance with example embodiments.
FIG. 3 is a graph showing a volume-based particle size distribution of an anode active material according to Example 1.
FIG. 4 is a graph showing a volume-based particle size distribution of an anode active material according to Comparative Example 1.

### DETAILED DESCRIPTION

Section headings are used in the present document only for ease of understanding and do not limit scope of the embodiments to the section in which they are described.

The disclosed technology can be implemented in some embodiments to provide an anode active material that includes different types of materials and a lithium secondary battery including the anode active material that includes different types of materials. In some embodiments of the disclosed technology, an anode active material includes a composite active material particle including a carbon-based active material and a silicon-based active material, and a carbon coating at least partially covering the composite active material particle.

The disclosed technology can also be implemented in some embodiments to provide an anode for a lithium secondary battery and a lithium secondary battery including the anode.

The lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

For example, the anode may include a carbon-based active material or silicon-based active material particles as an anode active material. When the battery is repeatedly charged and discharged, mechanical and chemical damage such as particle cracks may occur to cause a poor contact between the active material particles or a shortcircuit.

In some implementations, however, any changes in a composition and a structure of the anode active material that can improve stability of the active material particles may result in a deterioration in a conductivity and a power of the secondary battery. To address these issues, the disclosed technology can be implemented in some embodiments to provide an anode active material capable of enhancing life-span stability and power/capacity properties. In addition, in order to address such issues, the disclosed technology can be implemented in some embodiments to provide a lithium secondary battery design that includes an electrode assembly for a lithium secondary battery.

Hereinafter, various features of the disclosed technology will be described in detail with reference to embodiments and the accompanying drawings.

### Anode Active Material

An anode active material includes a composite active material particle including a silicon-based active material and a carbon-based active material, and a carbon coating covering at least a portion of a surface of the composite active material particle.

For example, the composite active material particle may have a particle shape in which a plurality of silicon-based active material particles and carbon-based active material particles are physically bonded or aggregated. In some implementations, the carbon-based active material includes an active material that includes carbon, and the silicon-based active material includes an active material that includes silicon. For example, the composite active material particle may contain a first active material (e.g., silicon-based active material) including silicon and a second active material (e.g., carbon-based active material) including carbon.

The silicon-based active material has a high energy density, so that an initial efficiency and charge/discharge capacity of the anode active material may be improved. However, the silicon-based active material may react with an electrolyte, thereby forming a solid electrolyte interphase (SEI), and irreversible decomposition of the electrolyte may cause an electrolyte depletion and a resistance to increase.

The carbon-based active material and the silicon-based active material may be physically combined to form the composite active material particle, so that the number of particles having a relatively small diameter may be decreased, and a contact area between the silicon-based active material and the electrolyte may be decreased. Thus, side reactions due to the contact between the silicon-based active material and the electrolyte may be suppressed, and a life-span and a capacity retention of the secondary battery may be improved by inducing reversible charge/discharge performance.

The anode active material includes the carbon coating at least partially covering the surface of the composite active material particle. For example, the carbon coating may be formed on the composite active material particle by a chemical vapor deposition (CVD) of a hydrocarbon gas. For example, the carbon coating disposed over the composite active material particle to cover at least a portion of a surface of the composite active material particle.

An exposure of the silicon-based active material to the electrolyte may be suppressed by the carbon coating. Accordingly, swelling and expansion of the silicon-based active material that otherwise would have been caused by repetitive charging/discharging may be suppressed, and the side reactions with the electrolyte may be prevented, thereby improving the life-span properties and the capacity retention.

In some embodiments, the carbon coating may include an amorphous carbon such as hard carbon, soft carbon, a calcined coke, a mesophase pitch carbide, etc., and/or a crystalline carbon such as natural graphite, artificial graphite, etc. These materials may be used alone or in a combination thereof.

In one embodiment, the carbon coating may include the amorphous carbon, such as hard carbon and/or soft carbon. The amorphous carbon may provide higher structural stability and may suppress deterioration of the silicon-based active material due to charging and discharging even in a low state of charge (SOC) where the silicon-based active material mainly reacts.

In some embodiments, the carbon coating may include a carbon-based material having a crystallinity different from a crystallinity of the carbon-based active material. For example, the crystallinity of the carbon coating may be smaller than the crystallinity of the carbon-based active material. The carbon-based active material has higher crystallinity, so that the composite active material particles may have enhanced ionic and electronic conductivity, and a charge/discharge capacity of the lithium secondary battery may be increased. Additionally, the carbon coating has a relatively low crystallinity, so that structural stability of the composite active material particle may be improved, and expansion and deformation of the particle may be prevented.

For example, a carbon precursor may be calcined at a high temperature of 900 °C or more to provide the carbon-based active material having the higher crystallinity. For example, the hydrocarbon gas may be deposited on the composite active material particle at a low temperature of 600 °C or less to provide the carbon coating having the relatively low crystallinity.

In one embodiment, the carbon coating may be discontinuously distributed on the surface of the composite active material particle. For example, the amorphous carbon may be present in the form of islands on a local area of the surface of the composite active material particle.

In one embodiment, the carbon coating may be continuously and uniformly distributed on the surface of the composite active material particle. For example, the amorphous carbon may be present in the form of a film covering at least a portion of the surface of the composite active material particle.

The anode active material includes a plurality of the composite active material particles having the carbon coating formed thereon.

A ratio of D₁₀ to D₅₀ (D₁₀/D₅₀) of the anode active material is in a range from 0.40 to 0.75. For example, D₁₀/D₅₀ may be in a range from 0.45 to 0.7.

In some implementations, D₅₀ represents a volume average particle diameter of the anode active material. For example, a particle size distribution of the anode active material is measured, and a particle size at a volume fraction of 50% (e.g., a particle diameter corresponding to a volume fraction of 50%) by an accumulation from the smallest particle in the measured particle size distribution is D₅₀. In some implementations, D₁₀ represents a particle size at a volume fraction of 10% (e.g., a particle diameter corresponding to a volume fraction of 10%) by the accumulation from the smallest particle in the particle size distribution of the anode active material.

In some implementations, the term "particle size" may refer to the longest diameter of any particle. The particle size of the anode active material may be measured using a scanning electron microscope (SEM), a transmission electron microscope (TEM), light scattering, or a laser diffraction method. For example, the particle size distribution of the anode active material may be measured by dispersing the anode active material in a dispersion medium and then using a laser diffraction particle size analyzer.

If the ratio of D₁₀ to D₅₀ of the anode active material is less than 0.4, a content of micro-particles having a smaller particle diameter than an average particle diameter may be increased. Accordingly, expansion of active material particles due to intercalation/extraction of lithium ions may be caused. Further, as charging and discharging are repeated, an adhesion between particles may be deteriorated to degrade cycle properties.

If the ratio of D₁₀ to D₅₀ of the anode active material is greater than 0.75, a content of macro-particles having a relatively large particle size may be increased. Accordingly, a resistance may be increased, and power and capacity properties may be deteriorated.

In some embodiments, D₅₀ of the anode active material may be 20 µm or less. D₅₀ of the anode active material may be adjusted to 20 µm or less, so that sufficient ion/electron path may be formed in the anode to improve an initial capacity and power properties of the secondary battery.

In one embodiment, D50 of the anode active material may be in a range from 5 µm to 20 µm, for example from 5 µm to 10 µm. Within the above range, structural stability may be improved to prevent cracks and expansion of the anode active material due to repeated charging and discharging while preventing a reduction of the energy density.

A ratio of a minimum particle diameter (Dₘᵢₙ) to D₅₀ (Dₘᵢₙ/D₅₀) of the anode active material is 0.3 or more. In this case, the content of the micro-particles may be appropriately adjusted. For example, the ratio of Dₘᵢₙ to D50 of the anode active material may be in a range from 0.3 to 1.

In some implementations, the minimum particle diameter (Dₘᵢₙ) of the anode active material refers to the smallest particle diameter in the particle size distribution of the anode active material.

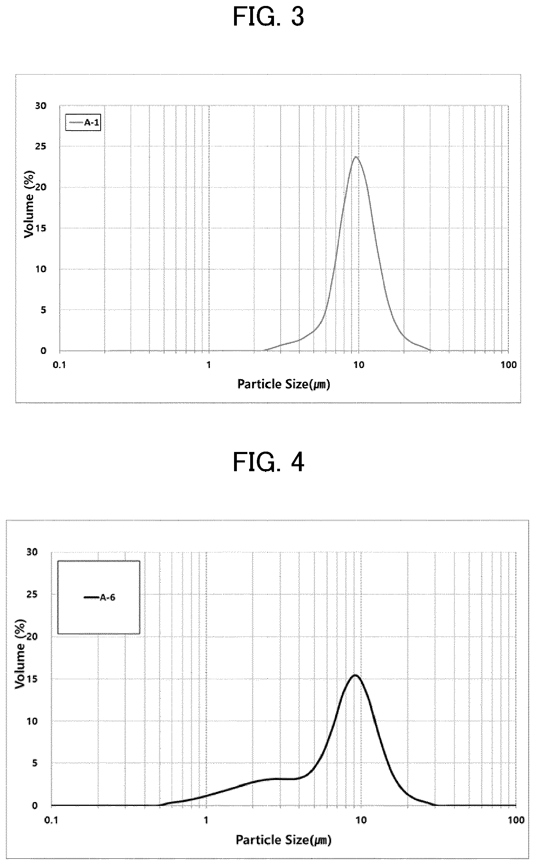

FIGS. 3 and 4 are graphs showing volume-based particle size distribution curves of anode active materials. For example, in FIGS. 3 and 4, the minimum particle diameter (Dₘᵢₙ) of the anode active material may correspond to an X-intercept of the volume-based particle size distribution curve.

As the content of the micro-particles in the anode active material becomes greater, a reaction volume of the anode active material may be increased, and the contact area with the electrolyte may be increased, thereby deteriorating structural stability of the anode active material. For example, the side reaction between the electrolyte and the anode active material may be increased to cause cracks and fractures on the surface of the anode active material. Further, a reversible capacity of the anode active material may be decreased to degrade an initial efficiency and capacity properties.

If the ratio of Dₘᵢₙ to D50 of the anode active material is 0.3 or more, the anode active material may have a narrow particle size distribution. Accordingly, the content of particles having a particle diameter similar to D₅₀ may be increased, and the contents of the micro-particles having the relatively small particle diameter and the micro-particles having the relatively large particle diameter may be decreased.

Thus, an increase of the reaction area due to the micro-particles may be suppressed, and the irreversible consumption of the electrolyte and deterioration of the anode active material due to repeated charging and discharging may be prevented. Additionally, the reduction of lithium ionic and electronic conductivity due to the macro-particles may be prevented.

In some embodiments, the ratio of Dₘᵢₙ to D₅₀ of the anode active material may be in a range from about 0.3 to about 0.6, for example from about 0.3 to about 0.5. Within the above range, the lithium secondary battery having high efficiency and high power may be provided, and structural stability and life-span properties of the anode active material may be improved.

In example embodiments, the anode active material may have the minimum particle diameter (Dₘᵢₙ) of 2 µm or more.

If the anode active material has Dₘᵢₙ of less than 2 µm, damages/regeneration of the solid electrolyte interface layer may be increased as the contact area between the anode active material and the electrolyte increases. Accordingly, the consumption of the electrolyte may be accelerated due to repeated charge/discharge cycles to degrade the capacity and life-span properties of the secondary battery.

In some embodiments, the anode active material may have Dₘᵢₙ from about 2 µm to about 7 µm, for example from about 3 µm to about 5 µm. Within the above range, the contact area of the anode active material may be adjusted to improve the lithium ion conductivity while suppressing the side reactions. Thus, the power and life-span properties of the lithium secondary battery may be improved.

For example, if the minimum particle diameter of the anode active material is greater than 7 µm, a diffusion distance of the lithium ions may be increased. Accordingly, the power properties, a charging rate and the charge/discharge capacity may be relatively lowered.

In one embodiment, the anode active material may have D₉₀ from about 10 µm to 20 µm, or from about 10 µm to 15 µm. For example, D₉₀ refers to a particle diameter at a volume fraction of 90% when accumulated from the smallest particle in the particle size distribution of the anode active material. Within the above range, the structural stability and lithium ion conductivity of the anode active material may be improved.

In one embodiment, a maximum particle diameter (Dₘₐₓ) of the anode active material may be in a range from about 15 µm to about 25 µm. For example, Dₘₐₓ refers to a particle diameter at a volume fraction of 99.9% when accumulated from the smallest particle in the particle size distribution of the anode active material. As the anode active material has a narrow particle size distribution within the above range, a particle size deviation between the anode active material particles may be reduced, thereby improving cycle properties and energy density.

In example embodiments, a specific surface area of the anode active material may be 8 m²/g or less. For example, the specific surface area may be measured by a Brunauer-Emmett-Teller (BET) measurement method based on an amount of a nitrogen gas adsorbed using a specific surface area measuring apparatus. If the specific surface area of the anode active material exceeds 8 m²/g, the contact between the electrolyte and the active material may be increased, and mechanical and structural stability of the active material may be lowered.

In some embodiments, the specific surface area of the anode active material may be in a range from about 2 m²/g to 8 m²/g, for example from about 3 m²/g to 5 m²/g. Within the above range, the cycle properties and lithium ion intercalation/extraction capability may be improved, so that the charge/discharge capacity and rapid charge performance may be enhanced.

In example embodiments, the composite active material particle may have a structure in which the silicon-based active material is embedded in the carbon-based active material. For example, the composite active material particle may have a structure in which a plurality of silicon-based particles are embedded in a carbon-based matrix. The silicon-based active material may be physically bonded within the carbon-based active material. For example, the composite active material particles may be formed by the chemical vapor deposition (CVD), a physical vapor deposition (PVD), or a thermal deposition of a silane precursor in a carbon structure.

In some embodiments, at least a portion of the silicon-based active material may be located on the surface of the composite active material particle. For example, at least some of the silicon-based particles may be partially embedded in the carbon-based active material. In this case, the silicon-based active material may be exposed on the surface of the composite active material particle, so that intercalation and emission of lithium ions may be improved, and the charge/discharge capacity and rapid charge performance may be enhanced.

In example embodiments, the silicon-based active material may cover at least a portion of the surface of the carbon-based active material. For example, the silicon-based active material may be continuously and uniformly distributed on the surface of the carbon-based active material particle. For example, the silicon-based active material may be present in the form of a film covering at least a portion of the surface of the carbon-based active material.

In some embodiments, a molar ratio of silicon atoms relative to carbon atoms in the composite active material particle may be 0.7 or less. In one embodiment, the molar ratio of silicon atoms to carbon atoms may be from 0.1 to 0.7, for example from 0.2 to 0.5.

If the molar ratio of silicon atoms to carbon atoms exceeds 0.7, a short circuit may occur in the electrode due to an expansion of the anode active material, and life-span and capacity recovery rate may be relatively reduced. When the molar ratio of silicon atoms to carbon atoms is less than 0.1, the capacity and energy density of the battery may be relatively reduced.

In example embodiments, the composite active material particle may include pores at an inside or on the surface thereof. For example, a plurality of pores may exist in at least a portion of the inside or the surface of the composite active material particle.

The composite active material particle may have the pores, so that volume expansion and deterioration of the composite active material particle may be alleviated and detachment/peel-off of the anode active material layer may be prevented. For example, during repetitive charging/discharging, the silicon-based active material may expand to cause collapse or degradation of composite active material particles. In example embodiments, the pores present at the inside or on the surface of the composite active material particle may provide a space for accommodating the expanded silicon-based active material, so that the composite active material particle may be prevented from being collapsed or expanded.

In some embodiments, the pores may exist at an inside of the silicon-based active material. For example, the pores may be surrounded by the silicon-based active material. For example, the silicon-based active material may cover the surface of the porous carbon-based active material. In this case, during the charging and discharging, the silicon-based active material may expand toward the inside of the composite active material particle having the pores, thereby preventing an increase of the volume and the structural collapse of the composite active material particle. Thus, the structural stability of the anode active material and the cycle properties of the secondary battery may be improved.

In some embodiments, the pores may exist at the inside or on the surface of the carbon-based active material. For example, the carbon-based active material may have a porous structure. The lithium ion conductivity and electrical conductivity may be improved by the porous structure of the carbon-based active material.

In some embodiments, the pores may include voids formed between the silicon-based active material and the carbon-based active material. For example, at least a portion of the surface of the silicon-based active material and at least a portion of the surface of the carbon-based active material may be physically separated. The pores may be formed in or on the surface of the composite active material particle by the separated space.

In some embodiments, an average diameter of the pores may be 500 nm or less. For example, the average diameter of the pores may be measured by a BET measurement method based on an amount of nitrogen gas adsorption using a BET measuring apparatus. If the average diameter of the pores is greater than 500 nm, the structural stability of the composite active material particle may be relatively reduced, and cracks may occur in the composite active material particles under harsh conditions of high temperature/high humidity or during repeated charge/discharge operation.

In one embodiment, the average diameter of the pores may be in a range from about 1 nm to about 500 nm, for example from about 5 nm to about 300 nm, or from about 10 nm to about 100 nm. The cycle properties, the initial efficiency and the charge/discharge capacity may be improved within the above range.

In one embodiment, a porosity of the composite active material particle may be in a range from 0.1 volume percent (vol%) to 40 vol%, for example from 5 vol% to 30 vol% based on a total volume of the composite active material particle. Within the above range, the energy density and the rapid charging properties of the battery may be improved, and the volume expansion of the anode active material and the short circuit of the electrode may be prevented.

For example, the porosity of the composite active material particles may be measured by a nitrogen gas adsorption amount measurement method using a BET measuring apparatus.

In some embodiments, a content of the carbon coating may be in a range from 0.1 wt% to 15 wt%, for example from 1 wt% to 10 wt%, based on a total weight of the anode active material. For example, the content of the carbon coating may be measured using a thermogravimetric analysis (TGA).

Within the above range, a coverage ratio of the carbon coating on the composite active material particles may be increased, and the side reaction with the electrolyte may be prevented. Accordingly, the volume expansion of the silicon-based active material may be suppressed without lowering the energy density, and the rate properties of the battery may be improved.

In some embodiments, a thickness of the carbon coating may be 1 µm or less. Within the above range, the structural collapse of the anode active material due to charging and discharging may be prevented while maintaining high capacity and high rate properties of the secondary battery.

In some embodiments, the thickness of the carbon coating may be in a range from 0.001 µm to 1 µm, 0.001 µm to 0.2 µm, or 0.001 µm to 0.1 µm.

In some embodiments, the carbon-based active material (e.g., the second active material) may include an amorphous carbon such as hard carbon, soft carbon, calcined coke, and mesophase pitch carbide, etc., and/or a crystalline carbon such as natural graphite, artificial graphite, etc. These may be used alone or in combination of two or more.

In one embodiment, the carbon-based active material may include the crystalline carbon such as artificial graphite or natural graphite. For example, the crystalline carbon may provide a relatively high discharge capacity and life-span properties, and thus may be suitable for a high energy density battery. Further, natural graphite and artificial graphite having high thermal and chemical stability may be included, so that high-temperature storage and high-temperature life-span properties of the battery may be achieved.

In some embodiments, the silicon-based active material (e.g., the first active material) may include silicon (Si), silicon oxide (SiOx, 0<x<2), or a silicon-metal alloy. These may be used alone or in a combination thereof.

In one embodiment, the silicon oxide (SiOx, 0<x<2) may include a lithium compound or a magnesium compound. For example, a SiOx containing the lithium compound or the magnesium compound may be a SiOx pre-treated with lithium or magnesium. For example, the SiOx containing the lithium compound or the magnesium compound may include lithium silicate or magnesium silicate.

### <Lithium Secondary Battery>

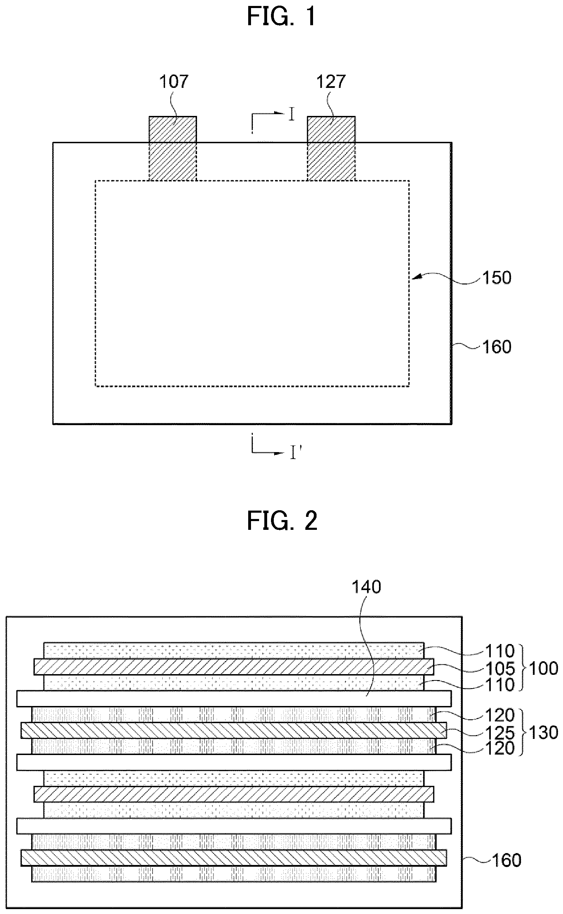

FIGS. 1 and 2 show a schematic top planar view and a schematic cross-sectional view, respectively, illustrating a secondary battery according to exemplary embodiments. For example, FIG. 2 is a cross-sectional view taken along a line I-I' of FIG. 1 in a thickness direction of the lithium secondary battery.

For convenience of descriptions, illustration of a cathode and an anode is omitted in FIG. 1.

Referring to FIGS. 1 and 2, the secondary battery may be provided as a lithium secondary battery. In exemplary embodiments, the secondary battery may include an electrode assembly 150 and a case 160 accommodating the electrode assembly 150. The electrode assembly 150 may include a cathode 100, an anode 130 and a separation layer 140.

The cathode 100 may include a cathode current collector 105 and a cathode active material layer 110 formed on at least one surface of the cathode current collector 105. In example embodiments, the cathode active material layer 110 may be formed on both surfaces (e.g., upper and lower surfaces) of the cathode current collector 105. For example, the cathode active material layer 110 may be coated on each of the upper and lower surfaces of the cathode current collector 105, and may be directly coated on the surface of the cathode current collector 105.

The cathode current collector 105 may include stainless-steel, nickel, aluminum, titanium, copper or an alloy thereof. For example, aluminum or an aluminum alloy may be used.

The cathode active material layer 110 may include a lithium metal oxide as a cathode active material. For example, a lithium (Li)-nickel (Ni)-based oxide may be used.

In some embodiments, the lithium metal oxide included in the cathode active material layer 110 may be represented by Chemical Formula 1 below.

[Chemical Formula 1] Li₁₊ₐNi_{1-(x+y)}CoₓM_{y}O₂

In the Chemical Formula 1 above, -0.05≤a≤0.15, 0.01≤x≤0.2, 0≤y≤0.2, and M may include at least one element selected from Mn, Mg, Sr, Ba, B, Al, Si, Ti, Zr and W. In one embodiment, 0.01≤x≤0.20, 0.01≤y≤0.15 in Chemical Formula 1.

In one embodiment, in Chemical Formula 1, M may be manganese (Mn). In this case, a nickel-cobalt-manganese (NCM)-based lithium oxide may be used as the cathode active material.

For example, nickel (Ni) may serve as a metal related to a capacity of the lithium secondary battery. As a content of nickel increases, capacity of the lithium secondary battery may be improved. However, if the content of nickel is excessively increased, life-span may be decreased, and mechanical and electrical stability may be degraded.

For example, cobalt (Co) may serve as a metal related to conductivity or resistance. In one embodiment, M may include manganese (Mn), and Mn may serve as a metal related to mechanical and electrical stability of the lithium secondary battery.

Capacity, power, low resistance and life-span stability may be improved together from the cathode active material layer 110 by the above-described interaction between nickel, cobalt and manganese.

For example, a cathode slurry may be prepared by mixing and stirring the cathode active material with a binder, a conductive material and/or a dispersive agent in a solvent. The cathode slurry may be coated on the cathode current collector 105, and then dried and pressed to form the cathode active material layer 110.

The binder may include a polyvinylidene fluoride-hexafluoropropylene copolymer (PVDF-co-HFP), polyvinylidenefluoride (PVDF), polyacrylonitrile, polymethylmethacrylate, polyvinylalcohol, polyvinylpyrrolidone, polyethylene, polypropylene, polyacrylic acid, styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material or lithium metal oxide particles may be relatively increased. Thus, capacity and power of the lithium secondary battery may be further improved.

For example, the conductive material may include a carbon-based material such as graphite, carbon black, a carbon nanofiber, a carbon nanotube, etc., and/or a metal-based material such as tin, tin oxide, zinc oxide, titanium oxide, a metal fiber, etc.

In some embodiments, an electrode density of the cathode 100 may be in a range from 3.0 g/cc to 3.9 g/cc, or from 3.2 g/cc to 3.8 g/cc.

The anode 130 may include an anode current collector 125 and an anode active material layer 120 formed on at least one surface of the anode current collector 125. In example embodiments, the anode active material layer 120 may be formed on both surfaces (e.g., upper and lower surfaces) of the anode current collector 125.

The anode active material layer 120 may be coated on each of the upper and lower surfaces of the anode current collector 125. For example, the anode active material layer 120 may directly contact the surface of the anode current collector 125.

The anode current collector 125 may include gold, stainless steel, nickel, aluminum, titanium, copper, or an alloy thereof. For example, the anode current collector 125 may include copper or a copper alloy.

In some embodiments, the anode active material layer 120 may include the above-described anode active material. For example, an anode slurry may be prepared by mixing and stirring the anode active material with a binder, a conductive material and/or a dispersant in a solvent. The anode slurry may be applied (coated) on the anode current collector, and then dried and pressed to form the anode active material layer 120.

Materials substantially the same as or similar to those used for forming the cathode 100 may be used as the binder and the conductive material for the anode 130. In some embodiments, the binder for forming the anode 130 may include, e.g., styrene-butadiene rubber (SBR) or an acrylic binder for compatibility with a graphite-based active material, and a thickener such as carboxymethyl cellulose (CMC) may also be used.

In example embodiments, an electrode density of the anode 130 may be in a range from 1.0 g/cc to 1.9 g/cc.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation to further improve power and capacity of the secondary battery.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

The separation layer 140 may extend between the cathode 100 and the anode 130, and may be folded and wound along the thickness direction of the lithium secondary battery. Accordingly, a plurality of the anodes 130 and the cathodes 100 may be stacked in the thickness direction using the separation layer140.

In example embodiments, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or folding of the separation layer 140.

The electrode assembly 150 may be accommodated together with an electrolyte in the case 160 to define the lithium secondary battery. The case 160 may include, e.g., a pouch, a can, etc.

In example embodiments, a non-aqueous electrolyte may be used as the electrolyte.

The non-aqueous electrolyte solution may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gammabutyrolactone, propylene sulfite, tetrahydrofuran, etc. These may be used alone or in a combination thereof.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

FIG. 1 illustrates that the cathode lead 107 and the anode lead 127 are positioned at the same side of the lithium secondary battery or the case 160, but the cathode lead 107 and the anode lead 127 may be formed at opposite sides to each other.

For example, the cathode lead 107 may be formed at one side of the case 160, and the anode lead 127 may be formed at the other side of the case 160.

The lithium secondary battery may be manufactured in, e.g., a cylindrical shape using a can, a square shape, a pouch shape or a coin shape.

The lithium secondary battery includes the anode active material according to the above-described embodiments to have improved cycle properties, long-term storage stability and charge/discharge capacity. As described above, the carbon coating is formed on the surface of the composite active material particle including the silicon-based active material and the carbon-based active material, so that structural stability and energy density of the anode active material may be improved. Additionally, the anode active material has a predetermined particle size distribution, so that side reactions between the anode active material and the electrolyte may be suppressed, and reduction of capacity and power of the secondary battery may be prevented.

Hereinafter, specific examples of implementations or embodiments of the disclosed technology are described to more concretely illustrate various features of the disclosed technology.

### Synthesis Example

### 1. Preparation of silicon-based active material

### (1) A-1 to A-8

Phenol and formaldehyde were mixed in a molar ratio of 1:2, and triethylamine was added in an amount of 2.0 wt% to the mixture. The mixed solution was stirred at a temperature of 85 °C at a rotational speed of 200 rpm for 4 hours to synthesize a resol oligomer. 1 g of polyvinyl alcohol (PVA) was dispersed in a water-dispersible medium, and then the synthesized resol oligomer was added.

Thereafter, 3 g of hexamethylenetetramine (HMTA) was added as a curing agent and reacted by stirring for 12 hours at a temperature of 95 °C at a rotation speed of 400 rpm. The reaction product was filtered using a sieve (500 mesh stainless steel) and washed with water. Unreacted monomers and oligomers were removed using ethanol, and dried to obtain a product. Thereafter, a calcination was performed at a temperature of 950 °C for 2 hours under a nitrogen atmosphere, and carbonization was performed at a temperature of 900 °C while CO₂ was introduced at a rate of 1 L/min to prepare a carbon structure.

A silane precursor-treatment was performed by a chemical vapor deposition (CVD) process at 500 °C on the prepared carbon structure to form composite active material particles. A carbon coating was formed on the prepared composite active material particles by a chemical vapor deposition (CVD) treatment of methane gas as a hydrocarbon gas at 550 °C.

Then, particles having a size of 2 µm or less were removed using an air classifying mill, and particles were sieved and classified to obtain anode active materials A-1 to A-8 satisfying particle size distributions (Dₘᵢₙ, D₁₀, D₅₀, D₉₀, Dₘₐₓ) and specific surface area as shown in Table 1 below.

### (2) Preparation of anode active material: A-9

A carbon structure was prepared by the same method as that in A-1. A silane precursor-treatment was performed by a chemical vapor deposition (CVD) at 500 °C on the prepared carbon structure to form composite active material particles.

Thereafter, the particles were sieved and classified using an air classifying mill to obtain an anode active material A-9 satisfying the particle size distribution and specific surface area as shown in Table 1 below.

### (3) Preparation of anode active material: A-10

Silicon (Si) particles were heated to form a melt, and then rapidly solidified to form a solidified body. A carbon coating was formed on the prepared silicon solid body by a chemical vapor deposition (CVD) treatment of methane gas as a hydrocarbon gas at 550 °C.

Thereafter, the particles were sieved and classified using an air classifying mill to obtain an anode active material A-10 satisfying the particle size distribution and specific surface area as shown in Table 1 below.

### 2. Measurement of volume-based particle size distribution

The prepared anode active materials were dispersed in a dispersion medium (a water dispersion of 10 wt% sodium hexametaphosphate ((NaPO₃)₆)), and then a laser diffraction particle size analyzer (Microtrac MT 3000) was used to obtain a particle sized distribution based on a diffraction pattern difference according to a particle size. Dₘᵢₙ was measured as the smallest particle diameter in the measured volume-based particle size distribution curve, and the particle diameters at volume fractions of 10%, 50%, 90% and 99.9% were measured to obtain D₁₀, D₅₀, D₉₀ and Dₘₐₓ, respectively.

### 3. Measurement of specific surface area

The specific surface areas of the obtained anode active materials were measured by a BET method based on an amount of nitrogen gas adsorbed using a specific surface area measuring apparatus (BELSORP-mino II).

The measurement results are shown in Table 1 below.

**[Table 1]**

| No. | Dₘᵢₙ (*µ*m) | D₁₀ (*µ*m) | D₅₀ (*µ*m) | D₉₀ (*µ*m) | Dₘₐₓ (*µ*m) | specific surface area (m²/g) | Dₘᵢₙ/D₅₀ | D₁₀/D₅₀ |
|---|---|---|---|---|---|---|---|---|
| Example 1 (A-1) | 2.4 | 5.1 | 8 | 12.2 | 22.7 | 3.6 | 0.3 | 0.64 |
| Example 2 (A-2) | 3.1 | 5.9 | 8.9 | 13.9 | 17.6 | 7.8 | 0.35 | 0.66 |
| Example 3 (A-3) | 3.1 | 6 | 10.5 | 17.1 | 24.5 | 2.1 | 0.3 | 0.57 |
| Example 4 (A-4) | 4.5 | 7 | 9.6 | 12.7 | 16.1 | 3.5 | 0.47 | 0.73 |
| Example 5 (A-5) | 3.0 | 3.8 | 8.1 | 11.9 | 21.8 | 7.8 | 0.37 | 0.47 |
| Comparative Example 1 (A-6) | 0.6 | 1.9 | 7.2 | 12.2 | 24.4 | 3.6 | 0.08 | 0.26 |
| Comparative Example 2 (A-7) | 0.3 | 1.2 | 1.8 | 2.6 | 4.9 | 8.5 | 0.17 | 0.67 |
| Comparative Example 3 (A-8) | 6.2 | 8.3 | 10.9 | 16.8 | 25.7 | 2.8 | 0.57 | 0.76 |
| Comparative Example 4 (A-9) | 3.0 | 5 | 9.2 | 13.3 | 24.1 | 3.4 | 0.33 | 0.54 |
| Comparative Example 5 (A-10) | 3.9 | 5.9 | 8.3 | 13.0 | 17.3 | 3.6 | 0.47 | 0.71 |

FIG. 3 is a graph showing a volume-based particle size distribution of an anode active material according to A-1. FIG. 4 is a graph showing a volume-based particle size distribution of an anode active material according to A-6.

Referring to FIGS. 3 and 4, the anode active material of A-1 had a small content of micro-particles. The anode active material of A-6 had a large content of micro-particles.

### Fabrication of Secondary Batteries

An anode slurry was prepared by mixing the anode active materials of Examples and Comparative Examples prepared as described above, carbon nanotubes (CNTs) as a conductive material, carboxymethyl cellulose (CMC) as a thickener and SBR as a binder in a weight ratio of 89.8: 0.2: 2.0: 8.0. The anode slurry was applied on a Cu foil, dried and pressed to prepare an anode having a mixture density of 4 mg/cm² (based on a cross section) and 1.7 g/cc.

A secondary battery in the form of a coin cell was manufactured using a Li foil as a counter electrode and an electrolyte containing 1 wt% of FEC, 1.0M LiPF₆ and a mixed solvent of EC:EMC=3:7.

### Experimental Example

### (1) Evaluation of life-span property

Charge (CC/CV, rate 0.1C, lower limit voltage 0.01V, cut-off current 0.01C) and discharge (CC, 0.1C, upper limit voltage 1.5V cut-off) at 25 °C for the secondary batteries according to Examples and Comparative Examples were set as one cycle, and the first cycle was performed. Thereafter, the rate was increased to 0.5C, and then charge/discharge were repeatedly performed at intervals of 10 minutes to measure a timing of a sudden life-span drop. The sudden life-span drop refers to a case in which a capacity retention drops by 10% or more within 10 cycles.

### (2) Evaluation on power property

Charge (CC/CV, rate 0.1C, lower limit voltage 0.01V, cut-off current 0.01C) and discharge (CC, 0.1C, upper limit voltage 1.5V cut-off) at 25 °C for the secondary batteries according to Examples and Comparative Examples were performed to measure an initial discharge capacity.

The charge and discharge were set as one cycle, the rate was increased to 0.5 C, and then two more cycles of charge and discharge were performed. A power property was evaluated as a percentage of a discharge capacity in the 3rd cycle relative to the initial discharge capacity.

### (3) Evaluation on high-temperature storage

Charge (CC/CV, rate 0.1C, lower limit voltage 0.01V, cut-off current 0.01C) and discharge (CC, 0.1C, upper limit voltage 1.5V cut-off) at 25 °C for secondary batteries according to Examples and Comparative Examples were performed to measure an initial discharge capacity.

Thereafter, the secondary batteries according to Examples and Comparative Examples were charged up to SOC100%, stored in an oven at 45 °C for 2 weeks, and then discharged. Specifically, a discharge capacity was measured by performing the discharge (CC, 0.1C, upper limit voltage 1.5V cut-off) at 25 °C, and a high-temperature storage property was evaluated as a percentage of the discharge capacity after the storage relative to the initial discharge capacity.

The evaluation results are shown in Table 2 below.

**[Table 2]**

| No. | sudden life-span drop timing (cycle) | power property (%) | high-temperature storage (%) |
|---|---|---|---|
| Example 1 | 158 | 91 | 90 |
| Example 2 | 157 | 92 | 92 |
| Example 3 | 151 | 91 | 93 |
| Example 4 | 153 | 90 | 91 |
| Example 5 | 140 | 92 | 88 |
| Comparative Example 1 | 92 | 90 | 82 |
| Comparative Example 2 | 58 | 94 | 80 |
| Comparative Example 3 | 130 | 83 | 87 |
| Comparative Example 4 | 41 | 86 | 79 |
| Comparative Example 5 | 38 | 83 | 77 |

Referring to Tables 1 and 2, in Examples where the particle size distribution of the anode active material satisfied a predetermined condition, the life-span, power and high-temperature storage properties of the lithium secondary battery were entirely improved.

In Comparative Examples 1 and 3 where the ratio of D₁₀ to D50 of the anode active material was less than 0.40 or greater than 0.75, the life-span and high-temperature storage properties of the lithium secondary battery were entirely deteriorated.

In Comparative Examples 1 and 2 where the ratio of Dₘᵢₙ to D₅₀ of the anode active material was less than 0.3, the life-span and power properties of the lithium secondary battery were deteriorated.

In Comparative Example 4 using an anode active material devoid of a carbon coating and Comparative Example 5 where the composite active material particle was not used, the life-span and high-temperature storage properties were deteriorated.

## Claims

1. An anode active material for a secondary battery, comprising:
a plurality of composite active material particles, each composite active material particle containing a first active material including silicon and a second active material including carbon; and
a carbon coating covering at least a portion of a surface of at least one of the plurality of composite active material particles,
wherein the anode active material has a volume-based particle size distribution represented as a ratio D₁₀/D₅₀ ranging from 0.40 to 0.75 and a ratio Dₘᵢₙ/D₅₀ ranging from 0.3 to 1, wherein D₁₀ indicates a particle diameter corresponding to a volume fraction of 10%, D₅₀ indicates a particle diameter corresponding to a volume fraction of 50%, and Dₘᵢₙ indicates a minimum particle diameter.

2. The anode active material for a secondary battery according to claim 1, wherein the ratio Dₘᵢₙ/D₅₀ of the anode active material is in a range from 0.3 to 0.6.

3. The anode active material for a secondary battery according to any one of claims 1 and 2, wherein the minimum particle diameter Dₘᵢₙ of the anode active material is 2 µm or more.

4. The anode active material for a secondary battery according to claim 3, wherein the minimum particle diameter Dₘᵢₙ of the anode active material is in a range from 3 µm to 7 µm.

5. The anode active material for a secondary battery according to any one of claims 1 to 4, wherein the D₅₀ of the anode active material is in a range from 5 µm to 20 µm.

6. The anode active material for a secondary battery according to any one of claims 1 to 5, wherein a specific surface area of the anode active material is in a range from 2m²/g to 8m²/g.

7. The anode active material for a secondary battery according to any one of claims 1 to 6, wherein at least one of the plurality of composite active material particles has a structure in which at least a portion of the first active material is embedded in the second active material.

8. The anode active material for a secondary battery according to claim 7, wherein at least a portion of the first active material is exposed to the surface of the at least one of the plurality of composite active material particles.

9. The anode active material for a secondary battery according to any one of claims 1 to 8, wherein a molar ratio of silicon atoms to carbon atoms in the composite active material particle is 0.7 or less.

10. The anode active material for a secondary battery according to any one of claims 1 to 9, wherein the composite active material particle includes a plurality of pores at an inside or on the surface of the composite active material particle.

11. The anode active material for a secondary battery according to claim 10, wherein an average diameter of the pores is in a range from 1 nm to 500 nm.

12. The anode active material for a secondary battery according to any one of claims 10 and 11, wherein a porosity of the composite active material particle is in a range from 0.1 vol% to 40 vol% based on a total volume of the composite active material particle.

13. The anode active material for a secondary battery according to any one of claims 1 to 12, wherein a content of the carbon coating is in a range from 0.1 wt% to 15 wt% based on a total weight of the anode active material.

14. The anode active material for a secondary battery according to any one of claims 1 to 13, wherein a crystallinity of the carbon coating is smaller than a crystallinity of the second active material.

15. A lithium secondary battery, comprising:
an anode comprising an anode active material for a secondary battery according to any one of claims 1 to 14; and
a cathode facing the anode.
